Europäisches Patentamt

European Patent Office

Office européen des brevets

(19)

(11) Veröffentlichungsnummer: **0 239 683**
**B1**

(12) **EUROPÄISCHE PATENTSCHRIFT**

(45) Veröffentlichungstag der Patentschrift:
07.06.89

(21) Anmeldenummer: 86202100.3

(22) Anmeldetag: 26.11.86

(51) Int. Cl.⁴: **C04B 18/02,** C04B 18/04,
C02F 11/00, B01J 2/14

(54) Verfahren zur Herstellung von festen Agglomeraten aus mineralischen Schlämmmen.

(30) Priorität: 29.01.86 DE 3602562

(43) Veröffentlichungstag der Anmeldung:
07.10.87 Patentblatt 87/41

(45) Bekanntmachung des Hinweises auf die Patenterteilung:
07.06.89 Patentblatt 89/23

(84) Benannte Vertragsstaaten:
BE DE FR GB NL

(56) Entgegenhaltungen:
EP-A- 0 168 532
AT-B- 299 789
DE-A- 2 142 006
DE-A- 3 150 993

(73) Patentinhaber: METALLGESELLSCHAFT AG,
Reuterweg 14 Postfach 3724, D-6000 Frankfurt/M.1(DE)

(72) Erfinder: Boss, Karl-Heinz, Vor der Kuppe 5, D-6380 Bad Homburg(DE)
Erfinder: Cappel, Fred, Dr., Schopenhauerstrasse 13, D-6072 Dreieich(DE)
Erfinder: Hankel, Dirk, Dr., Wiesenstrasse 3, D-6052 Mühlheim 3(DE)

(74) Vertreter: Rieger, Harald, Dr., Reuterweg 14, D-6000 Frankfurt am Main(DE)

**Beschreibung**

Die Erfindung betrifft ein Verfahren zur Herstellung von festen Agglomeraten aus stichfesten, mineralischen Schlämmen, die organische Bestandteile bis zu I0 % enthalten.

Solche Schlämme fallen insbesondere beim Ausbaggern von Häfen oder Flüssen an und werden auch als Schlick bezeichnet. Ihre Trockensubstanz besteht hauptsächlich aus mineralischen Stoffen und bis zu etwa I0 % aus organischen Stoffen, bezogen auf trockene Substanz. Sie enthalten Schwermetalle, wie Blei, Zink, Cadmium, Chrom usw. Ihr Wassergehalt liegt im allgemeinen über 60 %. Durch Entwässern kann der Wassergehalt zwar gesenkt werden, liegt aber immer noch sehr hoch. Diese Schlämme ergeben wegen ihres hohen Wassergehaltes und ihres Gehaltes an Schwermetallen und organischen Bestandteilen beträchtliche Deponie-Probleme.

EP-A 0 168 532 beschreibt, daß der Wassergehalt auf etwa 50% bezogen auf trockene Substanz reduziert werden kann, d.h. auf etwa 33,3% in der Mischung. Die Reduzierung erfolgt entweder durch Pressen, langzeitige Alterung oder durch Zugabe von trockenen, nicht-plastischen Stoffen. Diese trockenen, nicht plastischen Stoffe sind pulverförmige Verbrennungsrückstände, insbesondere Flugaschen.

Der Erfindung liegt die Aufgabe zugrunde, solche Schlämme in ein verwertbares oder gut deponierbares Produkt zu verwandeln.

Die Lösung dieser Aufgabe erfolgt erfindungsgemäß dadurch, daß der stichfeste Schlamm mit einem Wassergehalt von 40 - 65 % mit trockenem Rückgut in einem solchen Verhältnis gemischt wird, daß der Wassergehalt in der Mischung 20 - 30 % beträgt, und daß der Gehalt an organischen Bestandteilen bei vollständiger Verbrennung in der Produkt-Schicht nicht zur Überschreitung der gewünschten Klinkertemperatur führt, die Mischung pelletiert wird, die Grünpellets auf einen Wanderrost chargiert werden, durch das Pellet-Bett heiße sauerstoffhaltige Gase von 500 - 900°C geleitet werden, bis mindestens die oberste Schicht des Pellet-Bettes auf die Temperatur der heißen Gase aufgeheizt ist, anschließend heiße sauerstoffhaltige Gase von II00 - II60°C durch das Pellet-Bett geleitet werden, bis die obere Schicht des Bettes geklinkert ist, danach kalte Gase durch das Bett geleitet werden, nach dem Abwurf die geklinkerte Produkt-Schicht von der darunter liegenden Schicht getrennt wird, und die darunter liegende Schicht als trockenes Rückgut mit dem Schlamm gemischt wird.

Der Ausdruck "stichfest" bedeutet, daß der Schlamm mit einem Spaten oder einer Schaufel abgestochen werden kann. Der Gehalt an organischen Bestandteilen ist auf trockenen Schlamm bezogen. Die Pelletierung erfolgt durch einen Abrollvorgang der Mischung auf einem Pelletierteller oder in einer Pelletiertrommel. Es können Pellets mit einem engen Kornband hergestellt werden oder Mischgranulate mit unterschiedlicher Korngröße. Die Korngröße der Pellets kann etwa 5 - I8 mm betragen. Vorzugsweise wird sie auf I0 - I5 mm eingestellt. Der maximal zulässige Gehalt an organischen Bestandteilen richtet sich nach dem Brennwert der organischen Bestandteile und der dadurch bei seiner Verbrennung in der später als geklinkertes Produkt abgeführten Produkt-Schicht. In dieser Produkt-Schicht darf die maximal gewünschte Klinkertemperatur nicht überschritten werden. Im allgemeinen darf der Gehalt an organischen Bestandteilen 4 - 6 %, bezogen auf trockenes Material, nicht übersteigen. Die Menge des Rückgutes beträgt je nach Wassergehalt und/oder Gehalt an organischen Bestandteilen 200 - 350 %, bezogen auf trockenen Schlamm. Die Höhe des Pellet-Bettes kann 30 - 40 cm betragen. Als unterste Schicht kann Rostbelag aus geklinkerten Pellets aufgegeben werden. Die Durchleitung der heißen Gase von 500 - 900°C erfolgt von oben nach unten so lange, bis mindestens 2 - 5 cm als oberste Schicht auf die Gastemperatur aufgeheizt sind. Die Dicke dieser aufgeheizten Schicht richtet sich nach dem Zerfallsverhalten der Pellets bei der anschließenden Behandlung mit den heißen Gasen von II00 - II60°C. Im allgemeinen reicht eine Behandlungszeit von 2 - 6 min - je nach dem Wassergehalt der Pellets - aus. Die Temperatur der heißen sauerstoffhaltigen Gase wird vorzugsweise so gewählt, daß in Abhängigkeit von der Verbrennungswärme der organischen Bestandteile in der obersten Schicht die Temperatur in den Pellets 950°C nicht überschreitet. Das Durchsaugen der Gase durch das Bett erfolgt mit einem Unterdruck von etwa 8 - 20 mbar. Anschließend werden heiße sauerstoffhaltige Gase von II00 - II60°C so lange durch das Bett geleitet, bis eine obere Schicht von etwa 40 - 60 % der Bett-Höhe geklinkert ist. Das Durchsaugen dieser Gase erfolgt mit einem Unterdruck von etwa I5 - 40 mbar. Die Temperatur der heißen Gase und die Dauer der Behandlung werden so eingestellt, daß eine Keramisierung der Pellets in der oberen Schicht eintritt, eine Verschlackung von niedrig schmelzenden Bestandteilen und eine Reduktion von Metallverbindungen jedoch möglichst vermieden wird. Die meisten Schwermetalle werden vollständig oder zu über 90 % eingebunden. Der Rest kann mit relativ geringem Aufwand aus den Abgasen abgeschieden werden. Die organischen Bestandteile in der oberen Schicht werden praktisch vollständig entfernt. Die obere Schicht ist geklinkert, wenn die unteren Pellets dieser Schicht eine Temperatur von etwa II00 - II30°C aufweisen.

Anschließend erfolgt eine Kühlung des Bettes mittels hindurchgeleiteter kalter Gase, im allgemeinen Luft. Die untere Schicht, die aus getrockneten und teilweise geklinkerten Pellets besteht, kann noch geringe Mengen an organischen Bestandteilen enthalten. Nach dem Abwurf vom Wanderrost wird das Material der Unterschicht von dem Material der Oberschicht getrennt. Die geklinkerte Oberschicht fällt teilweise in Form von miteinander verbundenen Pellets an, während die getrocknete und teilweise geklinkerte Unterschicht weitgehend in Form von einzelnen Pellets, Pelletsbruch und Abrieb besteht. Die Trennung kann deshalb durch entsprechende Siebung erfolgen. Das Material der Unterschicht wird auf die für das Rückgut erforderliche Korngröße zerkleinert. Falls die Menge nicht ausreicht, wird ein entsprechender Teil von geklinkertem Material zusätzlich zerkleinert.

Eine vorzugsweise Ausgestaltung besteht darin, daß beim Pelletieren der Mischung 0,5 - 1 % Wasser zugegeben werden. Diese Wasserzugabe erfolgt auch dann, wenn der Wassergehalt der Mischung bereits im geforderten Bereich liegt. Durch diese Wasserzugabe wird die Pelletierung verbessert.

Eine Ausgestaltung besteht darin, daß bei einer Unterschreitung eines Wassergehaltes von 20 % in der Mischung durch Rückgutzugabe zur Senkung des Gehaltes an organischen Bestandteilen eine Wasserzugabe zur Mischung erfolgt. Die Wasserzugabe kann beim Mischen und/oder beim Pelletieren erfolgen. Sie wird so bemessen, daß der Wassergehalt im geforderten Bereich liegt. Diese Arbeitsweise wird angewendet, wenn im Hinblick auf den maximal zulässigen Gehalt der Pellets an organischen Bestandteilen so viel Rückgut zugegeben werden muß, daß zwar dieser Gehalt an organischen Bestandteilen unterschritten wird, jedoch gleichzeitig der Wassergehalt unter 20 % gedrückt wird und deshalb für eine gute Pelletierung zu niedrig liegt.

Eine Ausgestaltung besteht darin, daß bei einer Unterschreitung des zur Klinkerung erforderlichen Gehaltes an organischen Bestandteilen in der Mischung durch Rückgutzuggabe zur Senkung des Wassergehaltes eine Zugabe von festem Brennstoff in die Mischung erfolgt. Der feste Brennstoff wird in feinkörniger Form beim Mischen zugegeben, z.B. als Koksgrus. Diese Arbeitsweise wird angewendet, wenn im Hinblick auf den gewünschten Wassergehalt der Pellets so viel Rückgut zugegeben werden muß, daß gleichzeitig mit der Einstellung dieses Wassergehaltes der Gehalt der Pellets an organischen Bestandteilen so weit gesenkt wird, daß er zur Erzielung einer guten Klinkerung in wirtschaftlich vertretbarer Zeit nicht ausreicht.

Eine vorzugsweise Ausgestaltung besteht darin, daß die Mischung in einem Mischer mit Schleudereffekt erfolgt. Solche Mischer enthalten hochtourig laufende Schaufeln oder dergl. und erzeugen eine feinkrümelige Mischung, die besser zu pelletieren ist als eine geknetete Mischung, wie sie z.B. in einem Kollergang erzeugt wird.

Eine vorzugsweise Ausgestaltung besteht darin, daß das Rückgut auf eine Korngröße von 0 - 3 mm zerkleinert wird. Diese Korngröße ergibt besonders gute Pelletiereigenschaften der Mischung.

Eine vorzugsweise Ausgestaltung besteht darin, daß die heißen sauerstoffhaltigen Gase von 1100 - 1160°C so lange durch das Bett geleitet werden, bis 40 - 60 % der Höhe des Bettes als obere Schicht geklinkert sind. Dadurch werden besonders gute Qualitäten des abzuführenden Produkt-Klinkers und günstige Betriebsbedingungen erzielt.

Die Erfindung wird anhand von Beispielen näher erläutert.

Der Hafenschlick bestand überwiegend aus Tonmineralien und Feldspat und enthielt nach einer Trocknung bei 105°C:

$C_{gesamt}$ 7,5 %
$S_{gesamt}$ 0,86 %
Zn 0,09 %
Pb 0,012 %
Cu 0,05 %
Cd <0,001 %

Die Herstellung der Pellets erfolgte auf einem Pelletierteller von 0,8 m Durchmesser unter Zusatz von Wasser zur Mischung. Das Rückgut aus einem vorhergehenden Versuch hatte eine Korngröße von 0 - 3 mm. Die Pellets hatten einen Durchmesser von 12 - 16 mm.

Die thermische Behandlung der Pellets erfolgte auf einer Sinterpfanne, die einen inneren Durchmesser von 30 cm hatte.

Die heißen, sauerstoffhaltigen Gase wurden durch Verbrennung von Öl und Gas mit Luft erzeugt und hatten einen Sauerstoffgehalt von über 15 %. Die heißen Gase wurden mittels einer Gashaube auf die Beschickung geleitet und durch die Beschickung in einen Windkasten unter der Sinterpfanne gesaugt. Ein Thermoelement ($T_1$) war in der Gashaube angeordnet und ermittelte die Heißgastemperatur. In der Beschickung waren drei weitere Thermoelemente wie folgt angeordnet: 5 cm unter der Oberfläche ($T_2$), in der Mitte ($T_3$) und kurz über dem Rostbelag ($T_4$).

Auf die Roststäbe der Sinterpfanne wurde eine Schicht von 5 cm Höhe aus geklinkerten Pellets als Rostbelag chargiert. Der Rostbelag wurde in einem vorangegangenen Versuch hergestellt. Auf den Rostbelag wurden feuchte Pellets in einer Schichthöhe von 30 cm chargiert.

Die thermische Behandlung erfolgte mit heißen Gasen, die innerhalb von etwa 2 - 3 min auf etwa 800°C aufgeheizt und durch die Beschickung gesaugt wurden, wobei der Saugzug etwa 1 - 2 mbar betrug. Dies erfolgte so lange, bis das Thermoelement $T_2$ etwa 800°C anzeigte. Dann wurde die Heißgastemperatur innerhalb von 2 min auf 1100 - 1130°C gesteigert und die Behandlung unter ansteigendem Saugzug auf etwa 20 mbar so lange fortgeführt, bis das Thermoelement $T_4$ etwa 2 min lang Temperaturkonstanz bei 1100 - 1120°C anzeigte.

Danach wurde Luft durch die Beschickung von unten nach oben gedrückt, bis die Temperatur auf etwa l50°C gesunken war.

Das geklinkerte Material aus Versuch 5 enthielt:

$C_{gesamt}$ 0,03 %
$S_{gesamt}$ 0,08 %
Zn 0,14 %
Pb <0,05 %
Cu 0,07 %
Cd <0,001 %

Die Entfernung des Kohlenstoffs lag über 98,5 % und die des Schwefels über 75 %. Die Schwermetalle waren fast zu l00 % eingebunden.

| Beispiel | | 1 | 2 | 3 | 4 | 5 | 6 | 7 |
|---|---|---|---|---|---|---|---|---|
| **Schlick** | | | | | | | | |
| Trockensubstanz | % | 60 | 55 | 50 | 50 | | 45 | 40 |
| Wassergehalt | % | 40 | 45 | 50 | 50 | | 55 | 60 |
| org. C-Gehalt (in Trockensubstanz) | % | 6–7 | 6–7 | 6–7 | 6–7 | | 6–7 | 6–7 |
| **Mischung** | | | | | | | | |
| Schlick | Teile | 100 | 100 | 100 | 100 | 100 | 100 | 100 |
| Trockensubstanz | % | 60 | 55 | 50 | 50 | | 45 | 40 |
| Rückgut/Trockensubstanz | % | 200 | 200 | 200 | 200 | | 250 | 300 |
| Wassergehalt | % | 20,7 | 22,0 | 26,5 | 22,4 | 23,0 | 25,2 | 25,7 |
| org. C-Gehalt | % | 2,3 | 2,3 | 2,3 | 3,3 | 2 | 4 | 1,7 |
| Kokszusatz (C-Gehalt) | % | 0 | 0 | 0 | 1.0 | 0 | 2,0 | 0 |
| **Grünpellets** | | | | | | | | |
| Wassergehalt | % | 20,8 | 24,1 | 29,6 | 25,8 | 24,3 | 27,9 | 26,5 |
| Druckfestigkeit | N/P | 11 | 14 | plastisch | plastisch | 11 | plastisch | plastisch |
| Fallzahl | | >30 | >30 | >30 | >30 | >30 | >30 | >30 |
| Trockenfestigkeit | N/P | 42 | 42 | 43 | 140 | 80 | 91 | 54 |
| **Klinker** | | | | | | | | |
| Anteil + 30 mm | % | 15 | 27,4 | 26,5 | 31,6 | 20,5 | 34,6 | 25,3 |
| Druckfestigkeit | N/P | 2270 | 3090 | 2020 | 2409 | 2265 | 2207 | 1942 |
| Leistung | tato/m$^2$ | 5,7 | 5,3 | 4,1 | 3,75 | 4,0 | 2,8 | 1,8 |

Die Vorteile der Erfindung bestehen darin, daß die organischen Bestandteile der Schlämme weitgehendst zu $CO_2$ und $H_2O$ verbrannt werden, die Verbrennungswärme im Prozeß genutzt wird, und die Schwermetalle im geklinkerten Produkt mineralisch eingeschlossen sind und damit in nicht auslaugbarer Form vorliegen. Das Produkt kann sehr gut deponiert oder als Baustoff oder Füllstoff verwendet werden. Etwaige geringe Mengen an verflüchtigten Schwermetallen können aus dem Abgas gut abgeschieden werden. Die Verbrennungswärme der organischen Bestandteile wird im Prozeß weitgehend ausgenutzt, die Durchsatzleistung ist hoch, die Gasmengen sind relativ niedrig und es kann ein Schlamm mit hohem Wassergehalt verarbeitet werden.

## Patentansprüche

1. Verfahren zur Herstellung von festen Agglomeraten aus stichfesten mineralischen Schlämmen, die organische Bestandteile bis zu etwa 10% enthalten, wobei der Wassergehalt des stichfesten Schlammes durch Mischung mit trockenen Materialien gesenkt wird, die Mischung pelletiert wird, die Grünpellets mittels heißer sauerstoffhaltiger Gase unter Verbrennung organischer Bestandteile des Schlammes auf Sintertemperatur aufgeheizt und anschließend gekühlt werden, dadurch gekennzeichnet, daß der stichfeste Schlamm mit einem Wassergehalt von 40–65% mit trockenem Rückgut in einem solchen Verhältnis gemischt wird, daß der Wassergehalt in der Mischung 20–30% beträgt, und daß der Gehalt an organischen Bestandteilen bei vollständiger Verbrennung in der Produkt-Schicht nicht zur Überschreitung der gewünschten Klinkertemperatur führt, die Mischung pelletiert wird, die Grünpellets auf einen Wanderrost chargiert werden, durch das Pellet-Bett heiße sauerstoffhaltige Gase von 500–900°C geleitet werden, bis mindestens die oberste Schicht des Pellet-Bettes auf die Temperatur der heißen Gase aufgeheizt ist, anschließend heiße sauerstoffhaltige Gase von 1100–1160°C durch das Pellet-Bett geleitet werden, bis die obere Schicht des Bettes geklinkert ist, danach kalte Gase durch das Bett geleitet werden, nach dem Abwurf die geklinkerte Produkt-Schicht von der darunter liegenden Schicht getrennt wird, und die darunter liegende Schicht als trockenes Rückgut mit dem Schlamm gemischt wird.

2. Verfahren nach Anspruch I, dadurch gekennzeichnet, daß beim Pelletieren der Mischung 0,5 - I % Wasser zugegeben werden.

3. Verfahren nach Anspruch I oder 2, dadurch gekennzeichnet, daß bei einer Unterschreitung eines Wassergehaltes von 20 % in der Mischung durch Rückgutzugabe zur Senkung des Gehaltes an organischen Bestandteilen eine Wasserzugabe zur Mischung erfolgt.

4. Verfahren nach Anspruch I oder 2, dadurch gekennzeichnet, daß bei einer Unterschreitung des zur Klinkerung erforderlichen Gehaltes an organischen Bestandteilen in der Mischung durch Rückgutzugabe zur Senkung des Wassergehaltes eine Zugabe von festem Brennstoff in die Mischung erfolgt.

5. Verfahren nach einem der Ansprüche I bis 4, dadurch gekennzeichnet, daß die Mischung in einem Mischer mit Schleudereffekt erfolgt.

6. Verfahren nach einem der Ansprüche I bis 5, dadurch gekennzeichnet, daß das Rückgut auf eine Korngröße von 0 - 3 mm zerkleinert wird.

7. Verfahren nach einem der Ansprüche I bis 6, dadurch gekennzeichnet, daß die heißen sauerstoffhaltigen Gase von II00 - II60°C so lange durch das Bett geleitet werden, bis 40 - 60 % der Höhe des Bettes als obere Schicht geklinkert sind.

## Claims

1. Process for producing solid agglomerates from compact mineral sludges which contain organic constituents of up to about 10%, the water content of the compact sludge being reduced by mixing with dry materials, the mixture being pelletised, the green pellets being heated up to the sintering temperature by means of hot oxygen-containing gases during burning organic constituents of the sludge and subsequently cooled, characterised in that the compact sludge with a water content of 40–65% is mixed with dry returns in such a ratio that the water content in the mixture is 20–30%, and that the content of organic constituents upon complete combustion in the product layer does not lead to exceeding the desired clinker temperature, the mixture is pelletised, the green pellets are charged onto a travelling grate, hot oxygen-containing gases at 500–900°C are passed through the pellet bed until at least the uppermost layer of the pellet bed is heated up to the temperature of the hot gases, then hot oxygen-containing gases at 1100–1160°C are passed through the pellet bed until the upper layer of the bed is clinkered, thereafter cold gases are passed through the bed, after discharging the clinkered product layer is separated from the layer underneath, and the layer underneath is mixed with the sludge as dry returns.

2. Process according to Claim 1, characterised in that during pelletisation of the mixture 0.5–1% water is added.

3. Process according to Claim 1 or 2, characterised in that in the event of the water content falling below 20% in the mixture due to the addition of returns to reduce the content of organic constituents, an addition of water to the mixture is made.

4. Process according to Claim 1 or 2, characterised in that in the event of the content of organic constituents falling below that required for clinkering in the mixture due to the addition of returns to reduce the water content, an addition of solid fuel to the mixture is made.

5. Process according to one of Claims 1 to 4, characterised in that the mixing takes place in a mixer with a centrifugal effect.

6. Process according to one of Claims 1 to 5, characterised in that the returns are crushed to a grain size of 0–3 mm.

7. Process according to one of Claims 1 to 6, characterised in that the hot oxygen-containing gases at 1100–1160°C are passed through the bed until 40–60% of the height of the bed has been clinkered as the upper layer.

## Revendications

1. Procédé de fabrication de produits agglomérés solides à partir de boues minéralifères consistantes et contenant jusqu'à 10% environ de constituants organiques, qui consiste à abaisser la teneur en eau de la boue consistante en la mélangeant à des matériaux secs, à bouleter le mélange, à porter les boulettes à vert, au moyen de gaz chauds et contenant de l'oxygène et en brûlant les constituants organiques de la boue, à une température de frittage et ensuite à les refroidir, caractérisé en ce qu'il consiste à mélanger de la boue consistante ayant une teneur en eau de 40 à 65% du produit recyclé sec en un rapport tel que la teneur en eau du mélange soit de 20 à 30%, et à faire en sorte que la teneur en constituants organiques, lors de la combustion complète dans la couche du produit, ne provoque pas le dépassement de la température souhaitée de clinkérisation, à bouleter le mélange, à charger les boulettes à vert sur une grille mobile, à envoyer, à travers le lit de boulettes, des gaz chauds et contenant de l'oxygène à une température de 500 à 900°C, jusqu'à ce qu'au moins la couche la plus élevée du lit de boulettes soit portée à la température du gaz chaud, puis à envoyer des gaz chauds et contenant de l'oxygène à une température de 1100 à 1160°C à travers le lit de boulettes, jusqu'à ce que la couche supérieure du lit soit clinkérisée, puis à envoyer des gaz froids à travers le lit après le déchargement, à séparer la couche de produit clinkérisée de la couche sous-jacente et à mélanger à la boue la couche sous-jacente, en tant que produit recyclé sec.

2. Procédé suivant la revendication 1, caractérisé en ce qu'il consiste, lors du bouletage du mélange à ajouter de 0,5 à 1% d'eau.

3. Procédé suivant la revendication 1 ou 2, caractérisé en ce qu'il consiste à effectuer, dans le cas où la teneur en eau du mélange devient inférieure à 20%, une addition d'eau au mélange par addition de produit recyclé pour diminuer la teneur en constituants organiques.

4. Procédé suivant la revendication 1 ou 2, caractérisé en ce qu'il consiste à effectuer, dans le cas où la teneur en constituants organiques du mélange devient inférieure à la teneur qui est nécessaire pour la clinkérisation, une addition de combustibles solides au mélange par addition de produits recyclés pour diminuer la teneur en eau.

5. Procédé suivant l'une des revendications 1 à 4, caractérisé en ce qu'il consiste à effectuer le mélange dans un mélangeur ayant un effet de centrifugation.

6. Procédé suivant l'une des revendications 1 à 5, caractérisé en ce qu'il consiste à fragmenter le produit recyclé à une granulométrie comprise entre 0 et 3 mm.

7. Procédé suivant l'une des revendications 1 à 6, caractérisé en ce qu'il consiste à envoyer les gaz chauds et contenant de l'oxygène à une température de 1100 à 1160°C à travers le lit, jusqu'à ce que de 40 à 60% de la hauteur du lit soient clinkérisés en formant la couche supérieure.